(19) **Europäisches Patentamt**

**European Patent Office**

**Office européen des brevets**

(11) **EP 1 258 644 A2**

(12) **EUROPEAN PATENT APPLICATION**

(43) Date of publication:
**20.11.2002 Bulletin 2002/47**

(51) Int Cl.$^7$: **F16C 33/62**

(21) Application number: **02010460.0**

(22) Date of filing: **08.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.05.2001 JP 2001148517**
**29.05.2001 JP 2001160694**

(71) Applicant: **NISSAN MOTOR COMPANY, LIMITED**
**Yokohama-shi, Kanagawa 221-0023 (JP)**

(72) Inventors:
• **Kurebayashi,Yutaka,**
**c/oR&D Div.Daido Tokushuko K.K**
**Nagoya-shi, Aichi 457-0811 (JP)**

• **Kimura, Toshimitsu,**
**c/oR&D Div.Daido Tokushuko K.K**
**Nagoya-shi, Aichi 457-0811 (JP)**
• **Yamaguchi, Takuro**
**Zushi-shi, Kanagawa 249-0003 (JP)**
• **Otani, Keizo**
**Kamakura-shi, Kanagawa 247-0063 (JP)**
• **Uchiyama, Noriko**
**Miura-shi, Kanagawa 238-0101 (JP)**

(74) Representative: **Grünecker, Kinkeldey,**
**Stockmair & Schwanhäusser Anwaltssozietät**
**Maximilianstrasse 58**
**80538 München (DE)**

(54) **Bearing pressure-resistant member and process for making the same**

(57)    A bearing pressure-resistant member, including a matrix and a carbide dispersed in the matrix, the carbide having an average particle size of not more than 0.3 μm. A C content in an outer surface of the bearing pressure-resistant member is in a range of 0.6 to 1.5 mass percent. A process for making the bearing pressure-resistant member including subjecting a workpiece containing C to either of gas carburizing and gas carbonitriding to enhance the C content in the outer surface of the workpiece to 0.6 to 1.5 mass percent, holding the workpiece at a first temperature (tl) not more than an $Ac_1$ transformation point under reduced pressure, heating the workpiece to a second temperature (t2) not less than the $Ac_1$ transformation point under reduced pressure, followed by holding the workpiece at the second temperature (t2), and subjecting the workpiece to quenching.

**EP 1 258 644 A2**

**Description**

## BACKGROUND OF THE INVENTION

The present invention relates to an element useable as a power transmission part such as gears and rolling-contact bearings, which necessitates a high surface fatigue strength. More specifically, this invention relates to a bearing pressure-resistant member suitable for use under a relatively high bearing pressure in a relatively high temperature range of about 100°C to about 300°C, and relates to a process for making the bearing pressure-resistant member.

There have been proposed methods for enhancing bearing pressure strength of the above-described power transmission part. Among the methods, there are hyper-eutectoid carburizing and high density carburizing. In these carburizing methods, $M_3C$ carbide such as $Fe_3C$ which is not readily decomposed in the above-described temperature range, is precipitated so that hardness of the part and resistance to tempering softening can be enhanced. European Patent Application Publication No. 1070760 A2 (corresponding to Japanese Patent Application First Publication No. 2001-98343) discloses a bearing pressure-resistant member including $M_{23}C_6$ carbide particles which are precipitated in the matrix in a dispersed state. $M_{23}C_6$ carbide is formed by carbon (C) and metal combined with the C, which includes chromium (Cr), molybdenum (Mo) and the like. The precipitation of $M_{23}C_6$ carbide is performed by isothermal heat treatment carried out between carburizing and quenching, in which a workpiece is held at a temperature of not more than an $Ac_1$ transformation point. The bearing pressure-resistant member of this related technology has excellent surface fatigue strength as compared with steels in which $M_3C$ carbide is precipitated in the matrix. $M_{23}C_6$ carbide is also disclosed in United States Patent No. 6,342,109 (issued January 29, 2002, to Takemura et al).

Such carbides are precipitated in an outer surface of the element by isothermal heat treatment after subjecting the element to carburizing to increase a C content in the outer surface. In the isothermal heat treatment, the element carburized is held at a temperature at which C produces a solid solution with the matrix. This precipitation tends to start at a region where Cr forming carbides is locally present, or at grain boundaries of austenite particles at which nucleus of the precipitated carbide is produced. The precipitated carbide is grown in a homogeneously dispersed state in the outer surface of the element by the isothermal heat treatment. Thereafter, the element is subjected to quenching to provide the finished product.

Further, a heat treatment under controlled atmosphere (gas carburizing) is generally used as the carburizing method, which utilizes denatured gas made from propane ($C_3H_8$) gas. In addition, United States Patent No. 6,258,179 B1 describes vacuum carburizing in which hydrogen ($H_2$) generated upon gas carburizing hardly infiltrates into a material steel.

## SUMMARY OF THE INVENTION

However, it is difficult to homogeneously disperse $M_{23}C_6$ carbide in the entire structure of the element or the outer surface layer thereof which has an increased C content by carburizing, only by the above-described isothermal heat treatment. Therefore, the element will be provided with a region in which $M_{23}C_6$ carbide is not precipitated, so that the region will fail to be sufficiently hardened. Further, at the quenching step following the above-described holding step, dense texture will not be obtained at the region having no carbide precipitated and dispersed, causing deterioration in rolling fatigue strength. This is because carbide can prevent martensite produced upon quenching from coarsely growing up. In European Patent Application Publication No. 1070760 A2 as discussed above, a region having no $M_{23}C_6$ carbide precipitated will be generated or an excessively long treatment time will be required at the holding step. This causes increase in the production cost.

Further, residual $H_2$ infiltrating into the metal of the element during the gas carburizing as described above, can be remarkably reduced by the subsequent tempering. However, if the residual $H_2$ is insufficiently reduced, the element will suffer from delayed fracture or deterioration in bending fatigue strength and toughness. Recently, it has been recognized that rolling fatigue lives of rolling elements which undergo high bearing pressure upon coming into rolling contact with counterparts, will be considerably deteriorated due to the residual $H_2$. Furthermore, since $H_2$ is readily absorbed into the above-described carbide as well known, the residual $H_2$ must be reduced in the gas carburizing treatment. In order to reduce the residual $H_2$, there has been proposed baking in which an element is held at tempering temperature or less for several ten hours. This leads to decrease in production efficiency and increase in production cost. On the contrary, if the holding temperature is raised beyond a certain level, the element will be softened while the treatment time can be reduced.

In United States Patent No. 6,258,179 B1 as discussed above, coarse carbide tends to be produced at grain boundaries of austenite grains, so that rolling fatigue strength or bending fatigue strength will be deteriorated. In addition, apparatus for use in the vacuum carburizing treatment is relatively expensive.

An object of the present invention is to provide a bearing pressure-resistant member for use in power transmission, which has excellent surface fatigue strength with provision of $M_{23}C_6$ carbide homogeneously and finely dispersed in the matrix. Also, the object of the present invention is to provide a process for making the bearing pressure-resistant member by holding the element at a predetermined temperature to precipitate $M_{23}C_6$ carbide in the matrix in homogeneously and finely dispersed state, the process being capable of improving significantly surface fatigue strength. A further object of the present invention is to provide a bearing pressure-resistant member for use in power transmission, which is reduced in residual $H_2$ even by gas carburizing or gas carbonitriding, and enhanced bending fatigue strength or rolling fatigue strength, and a process for making the bearing pressure-resistant member, capable of suppressing deterioration in bending fatigue strength or rolling fatigue strength which will be caused due to delayed fracture or hydrogen embrittlement.

According to one aspect of the present invention, there is provided a bearing pressure-resistant member, comprising:

a matrix and a carbide dispersed in the matrix, said carbide having an average particle size of not more than 0.3 µm; and
a C content ranging from 0.6 to 1.5 mass percent in an outer surface thereof.

According to a further aspect of the present invention, there is provided a process for making a bearing pressure-resistant member, comprising:

subjecting a workpiece containing C to either of gas carburizing and gas carbonitriding to enhance a C content in an outer surface of the workpiece to 0.6 to 1.5 mass percent;
holding the workpiece at a first temperature not more than an $Ac_1$ transformation point under reduced pressure;
heating the workpiece to a second temperature not less than the $Ac_1$ transformation point under reduced pressure, followed by holding the workpiece at the second temperature; and
subjecting the workpiece to quenching.

According to a still further aspect of the present invention, there is provided a process for making a bearing pressure-resistant member, comprising:

heating a workpiece made of a mechanical structural steel containing C in an amount ranging from 0.6 to 1.5 mass percent, to a first temperature of 600°C to 750°C wherein the workpiece is heated at a rate of 0.2°C to 30°C per minute in a temperature range of 500°C to 650°C;
holding the workpiece at the first temperature;
heating the workpiece to a second temperature not less than an $Ac_1$ transformation point and not more than an Acm transformation point, followed by holding the workpiece at the second temperature; and
subjecting the workpiece to quenching.

According to a still further aspect of the present invention, there is provided a process for making a bearing pressure-resistant member, comprising:

heating a workpiece made of a mechanical structural steel containing C in an amount ranging from 0.6 to 1.5 mass percent, Cr in an amount ranging from 1.2 to 3.2 mass percent, and Mo in an amount ranging from 0.25 to 2.0 mass percent, to a first temperature of 600°C to 750°C under reduced pressure wherein the workpiece is heated at a rate of 0.2°C to 30°C per minute in a temperature range of 500°C to 650°C under reduced pressure;
holding the workpiece at the first temperature;
heating the workpiece to a second temperature not less than an $Ac_1$ transformation point and not more than a predetermined temperature T represented by the following formula:

$$T(°C) = 675 + 120·Si(\%) - 27·Ni(\%) + 30·Cr(\%) + 215·Mo(\%) - 400V(\%);$$

holding the workpiece at the second temperature; and
subjecting the workpiece to quenching.

## BRIEF DESCRIPTION OF THE DRAWINGS

Fig. 1 is an explanatory diagram illustrating first heat pattern of heat treatment carried out in examples of the present invention;
Fig. 2 is an explanatory diagram illustrating second heat pattern of heat treatment carried out in the examples of the present invention;

Fig. 3 is an explanatory diagram illustrating a condition of gas carburizing carried out in the examples of the present invention;

Fig. 4 is an explanatory diagram illustrating third heat pattern of heat treatment carried out in the examples of the present invention after the gas carburizing of Fig. 3;

Fig. 5 is a scanning electron microphotograph of a cross-section of an outer surface of a specimen of Comparative Example 1;

Fig. 6 is an explanatory diagram illustrating fourth heat pattern of heat treatment carried out in the examples of the present invention;

Figs. 7A and 7B are respectively a plan view and a side view of specimens used in the examples of the present invention; and

Figs. 8A and 8B show a schematic diagram of a thrust rolling fatigue tester used in examples of the present invention.

## DETAILED DESCRIPTION OF THE INVENTION

A bearing pressure-resistant member of the present invention includes a matrix and a carbide dispersed in the matrix. The carbide has an average particle size of not more than 0.3 μm. The bearing pressure-resistant member has a carbon (C) content ranging from 0.6 to 1.5 mass percent in at least an outer surface thereof. The carbide is precipitated in the matrix in uniformly and finely dispersed state. Owing to the above-described carbide, the bearing pressure-resistant member of the invention can be improved in bearing fatigue strength. The bearing pressure-resistant member of the invention can be suitably used as parts such as gears and rolling-contact bearings which are used under high bearing pressure.

The bearing pressure-resistant member may be made of a mechanical structural steel containing C in an amount ranging from 0.6 to 1.5 mass percent. More preferably, the bearing pressure-resistant member may be made of a mechanical structural steel containing C in an amount ranging from 0.6 to 1.5 mass percent, Cr in an amount ranging from 1.2 to 3.2 mass percent, and Mo in an amount ranging from 0.25 to 2.0 mass percent. The carbide is preferably $M_{23}C_6$ carbide containing at least Cr. Further, more preferably, the bearing pressure-resistant member may be made of a mechanical structural steel which contains Cr in an amount ranging from 1.2 to 3.2 mass percent and Mo in an amount ranging from 0.25 to 2.0 mass percent and is treated by either of carburizing and carbonitriding such that the C content is in the range of 0.6 to 1.5 mass percent.

Specifically, if the C content is below 0.6 mass percent, an amount of the carbide which is required for obtaining appropriate hardness cannot be precipitated. The carbide amount can be indicated as a ratio of an area of the carbide to a reference area of the bearing pressure-resistant member. If the C content is more than 1.5 mass percent, network of $M_3C$ carbide will be produced to thereby deteriorate mechanical properties of the bearing pressure-resistant member. Further, if the average particle size of the carbide is more than 0.3 μm, rolling fatigue life of the bearing pressure-resistant member will be reduced.

Furthermore, if the Cr content in the material steel is less than 1.2 mass percent, the amount of carbide will be decreased so that the bearing pressure-resistant member having excellent rolling fatigue life cannot be obtained. On the contrary, if the Cr content is more than 3.2 mass percent, machinability of the bearing pressure-resistant member will be deteriorated. Further, if the Mo content in the material steel is less than 0.25 mass percent, the $M_{23}C_6$ carbide will not be stably precipitated. If the Mo content in the material steel is less than 2.0 mass percent, the machinability of the bearing pressure-resistant member will be decreased. Owing to the Cr content and the Mo content which are in the above-described ranges, respectively, precipitation of the $M_{23}C_6$ carbide can be facilitated. This serves for assuring good rolling fatigue strength of the bearing pressure-resistant member even at the relatively high temperature range of about 100°C to about 300°C. Further, the $M_{23}C_6$ carbide is finely dispersible in the matrix as compared to other carbides. Therefore, the bearing pressure-resistant member containing the $M_{23}C_6$ carbide precipitated at the finely dispersed state in the matrix, can be significantly improved in rolling fatigue strength.

The C content in the outer surface of the bearing pressure-resistant member may be controlled to 0.6 to 1.5 mass percent by either of carburizing and carbonitriding. Namely, the amount of C contained in the outer surface of the bearing pressure-resistant member may be enhanced to 0.6 to 1.5 mass percent by either of carburizing and carbonitriding.

Alternatively, the amount of C contained in the outer surface of the bearing pressure-resistant member may be enhanced to 0.6 to 1.5 mass percent in by either of gas carburizing and gas carbonitriding. Gas carburizing and gas carbonitriding can be conducted with a cost-saving facility and at well-controlled carburizing concentration. This contributes to reduction of the production cost of the bearing pressure-resistant member and to suppression of coarse growth of carbide in the matrix. In addition, the bearing pressure-resistant member of the invention can exhibit high hardness and, therefore, excellent bearing fatigue strength. Further, upon the gas carburizing or gas carbonitriding, a whole amount of hydrogen ($H_2$) released over a temperature range of 100°C to 900°C, may be limited to not more than 0.2 ppm. This can prevent hydrogen embrittlement in high-hardness material steel which will occur due to adsorption of $H_2$ to the $M_{23}C_6$ carbide. The bearing pressure-resistant member of the invention, therefore, can exhibit increased bearing fatigue strength and excellent rolling fatigue life.

A process for making the bearing pressure-resistant member, according to the invention, is now explained. A workpiece containing C is subjected to either of gas carburizing and gas carbonitriding to enhance the amount of C contained in an outer surface of the workpiece to 0.6 to 1.5 mass percent. Next, the workpiece is subjected to a first isothermal heat treatment under reduced pressure. In the first isothermal heat treatment, the workpiece is held at a first temperature not more than an $Ac_1$ transformation point for a first period of time. Subsequently, the workpiece is subjected to a second isothermal heat treatment under reduced pressure. In the second isothermal heat treatment, the workpiece is heated to a second temperature not less than the $Ac_1$ transformation point, and then held at the second temperature for a second period of time. Subsequent to the holding at the second temperature, the workpiece is subjected to quenching to provide the bearing pressure-resistant member.

In the first isothermal heat treatment, an amount of $H_2$ contained in the workpiece is effectively reduced. In the second isothermal heat treatment and the quenching subsequent thereto, a tough structure of martensite or bainite is produced. The first isothermal heat treatment is conducted in advance of the second isothermal heat treatment. By the first isothermal heat treatment, the $H_2$ content in the workpiece is effectively reduced without deteriorating the hardness of the workpiece in spite of the first temperature higher than the temperature of the conventional baking. Further, since the first temperature is not more than the $Ac_1$ transformation point, there is shown no increase in grain size of austenite and no coarse growth of carbide present at grain boundaries of austenite grains. In addition, the process of the invention which employs gas carburizing or gas carbonitriding, can serve for saving the facility cost and readily controlling the carburizing concentration as explained above. According to the process of the invention, the bearing pressure-resistant member having excellent bearing fatigue strength and rolling fatigue life can be produced with an inexpensive production cost.

Specifically, the workpiece may be made of a mechanical structural steel containing Cr in an amount ranging from 1.2 to 3.2 mass percent and Mo in an amount ranging from 0.25 to 2.0 mass percent. The first temperature may be in a range of 600°C to 750°C which is reached by heating the workpiece at a rate of 0.2°C to 30°C per minute in a temperature range of 500°C to 650°C. The second temperature may be in the range not less than the $Ac_1$ transformation point but not more than a predetermined temperature T represented by the following formula:

$$T\ (°C) = 675 + 120·Si\ (\%) - 27.Ni\ (\%) + 30·Cr\ (\%) + 215·Mo\ (\%) - 400V\ (\%).$$

In the first isothermal heat treatment, the $H_2$ content in the workpiece is reduced, and at the same time, $M_{23}C_6$ carbide is homogeneously precipitated in the matrix. Upon heating the workpiece to the first temperature, the temperature rise rate is 0.2°C to 30°C per minute in the range of 500°C to 650°C wherein nucleus of the $M_{23}C_6$ carbide is produced. This facilitates producing the nucleus of the $M_{23}C_6$ carbide, so that the $M_{23}C_6$ carbide can be precipitated at more finely and homogeneously dispersed state in the matrix. By the second isothermal heat treatment subsequent to the first isothermal heat treatment, and the quenching, the precipitated $M_{23}C_6$ carbide can be kept in the homogeneously and finely dispersed state without formation of excessive solid solution. Then, the workpiece has martensite or bainite structure in the matrix. As a result, the bearing pressure-resistant member of the invention can be significantly increased in rolling fatigue strength.

A second process for making the bearing pressure-resistant member, according to the present invention, is explained. A workpiece made of a mechanical structural steel containing C in an amount ranging from 0.6 to 1.5 mass percent is heated to a first temperature of 600°C to 750°C wherein the workpiece is heated at a rate of 0.2°C to 30°C per minute in a temperature range of 500°C to 650°C. The workpiece is then held at the first temperature for a first period of time. Next, the workpiece is heated to a second temperature not less than an $Ac_1$ transformation point but not more than an Acm transformation point, and then held at the second temperature for a second period of time. Subsequent to the holding at the second temperature, the workpiece is subjected to quenching.

The workpiece may be subjected to either of carburizing and carbonitriding to enhance a C content in an outer surface of the workpiece to 0.6 to 1.5 mass percent before heating the workpiece to the first temperature. Specifically, in a case where the C content in the outer surface of the bearing pressure-resistant member is less than 0.6 mass percent, the amount of carbide required for appropriate hardness cannot be precipitated. In other words, a required ratio of an area of carbide precipitated in a local region of the outer surface of the bearing pressure-resistant member, to the whole area of the local region thereof cannot be obtained. If the C content in the outer surface of the bearing pressure-resistant member exceeds 1.5 mass percent, $M_3C$ carbide will be produced to thereby deteriorate mechanical properties of the bearing pressure-resistant member.

Further, if the first temperature is below 600°C, a rate of diffusion of C will decrease, whereby the growth of

$M_{23}C_6$ carbide will be significantly lowered. This causes increase in the production cost. If the first temperature is more than 750°C, the C content in the matrix will be consumed when the $M_3C$ carbide is produced. $M_{23}C_6$ carbide, therefore, cannot grow up so that the hardness of the bearing pressure-resistant member will not be assured. Furthermore, if the temperature rise rate is less than 0.2°C per minute in the range of 500°C to 650°C, the treatment time is excessively prolonged, causing increase in the production cost. If the temperature rise rate is more than 30°C per minute in the range of 500°C to 650°C, a time required for producing the nucleus of $M_{23}C_6$ carbide will be too short. This will cause lack of the amount of carbide precipitated. Preferably, the temperature rise rate is in a range of 0.2°C to 5°C per minute in the range of 500°C to 650°C.

Further, if the second temperature is less than the $Ac_1$ transformation point, the matrix obtained after quenching will not have martensite or bainite structure. If the second temperature is more than the Acm transformation point or temperature T as given by the above-described formula, the $M_{23}C_6$ carbide precipitated will form the solid solution again.

A third process for making the bearing pressure-resistant member, according to the present invention, is explained. A workpiece made of a mechanical structural steel containing C in an amount ranging from 0.6 to 1.5 mass percent, Cr in an amount ranging from 1.2 to 3.2 mass percent, and Mo in an amount ranging from 0.25 to 2.0 mass percent, is heated to a first temperature of 600°C to 750°C under reduced pressure. In the heat treatment, the workpiece is heated at a rate of 0.2°C to 30°C per minute in a temperature range of 500°C to 650°C, and held at the first temperature for a first period of time. Next, the workpiece is heated to a second temperature not less than an $Ac_1$ transformation point and not more than a predetermined temperature T represented by the following formula:

$$T(°C) = 675 + 120·Si(\%) - 27·Ni(\%) + 30·Cr(\%) + 215·Mo(\%) - 400V(\%)$$

The workpiece is then held at the second temperature for a second period of time. Subsequently, the workpiece is subjected to quenching.

The workpiece may be subjected to either of carburizing and carbonitriding to enhance a C content in an outer surface of the workpiece to 0.6 to 1.5 mass percent before heating the workpiece to the first temperature of 600°C to 750°C.

The reasons for limitation of the temperature ranges and component values as described above are summarized as follows. Here, the contents of the respective components are represented by mass percent.

Outer surface C content: 0.6% to 1.5%

If the C content is less than 0.6%, appropriate hardness of the outer surface of the bearing pressure-resistant member cannot be assured. If the C content is more than 1.5%, $M_3C$ carbide will be coarsely precipitated at the grain boundary of austenite grains. In this case, good bearing fatigue strength cannot be obtained.

Whole amount of $H_2$: 0.2 ppm or less

If a whole amount of $H_2$ is more than 0.2 ppm, hydrogen embrittlement will occur, causing deterioration of rolling fatigue life of a steel having a high C content and high hardness.

First isothermal heat treatment ($H_2$ reduction treatment) subsequent to either of gas carburizing, gas carbonitriding, carburizing and carbonitriding: temperature not more than $Ac_1$ transformation point under reduced pressure

If the temperature is more than the $Ac_1$ transformation point, undesired coarse carbide will be precipitated at grain boundary of austenite grains. The reduced pressure facilitates reduction of $H_2$ infiltrated into the steel and prevents occurrence of decarburization therein.

Quenching temperature: $Ac_1$ transformation point or more

If the temperature is less than the $Ac_1$ transformation point, a steel will not have martensite or bainite structure in the matrix. Therefore, required hardness of the bearing pressure-resistant member cannot be obtained.

Cr content: 1.2% to 3.2%

Since Cr is an essential for producing $M_{23}C_6$ carbide, it is preferable that a material steel contains Cr in an amount of 1.2% to 3.2%. If the Cr content is less than 1.2%, an amount of the $M_{23}C_6$ carbide precipitated will be decreased or stable precipitation of the $M_{23}C_6$ carbide cannot be attained. If the Cr content is more than 3.2%, production cost of the bearing pressure-resistant member will be increased and machinability thereof will be deteriorated.

Mo content: 0.25% to 2.0%

Mo is an element for producing $M_{23}C_6$ carbide. It is preferable that a material steel contains Mo in an amount of 0.25% to 2.0%. If the Mo content is less than 0.25%, an amount of the $M_{23}C_6$ carbide precipitated will be decreased or stable precipitation of the $M_{23}C_6$ carbide cannot be attained. If the Mo content exceeds 2.0%, there will occur increase in production cost of the bearing pressure-resistant member and deterioration of machinability thereof.

Average particle size of $M_{23}C_6$ carbide: 0.3 μm or less

If the average particle size of $M_{23}C_6$ carbide is more than 0.3 μm, too long time will be required for obtaining a uniform structure of the bearing pressure-resistant member in which the precipitated $M_{23}C_6$ carbide is finely and uniformly dispersed in the matrix. This will cause increase in production cost. If the average particle size of $M_{23}C_6$ carbide is excessively larger than 0.3 µm, rolling fatigue life of the bearing pressure-resistant member will be deteriorated.

Temperature of first isothermal heat treatment subsequent to either of gas carburizing, gas carbonitriding, carburizing and carbonitriding: 600°C to 750°C

If the temperature is less than 600°C, a rate of diffusion of C into the matrix will be small so that the growth of $M_{23}C_6$ carbide will be considerably slow. This will cause increase in production cost of the bearing pressure-resistant member. If the temperature is more than 750°C, C will be consumed for production of $M_3C$ carbide so that the growth of $M_{23}C_6$ carbide cannot be caused. As a result, required hardness of the bearing pressure-resistant member cannot be obtained.

Temperature rise rate upon heating up to the isothermal heat treatment temperature of 600°C to 750°C: 0.2°C to 30°C per minute

If the temperature rise rate is less than 0.2°C/min, the treatment time will be remarkably prolonged, causing increase in production cost of the bearing pressure-resistant member. If the temperature rise rate is more than 30°C/min, nucleus of $M_{23}C_6$ carbide will not be sufficiently formed so that the $M_{23}C_6$ carbide will not be uniformly and finely precipitated in the matrix.

Quenching temperature: not less than $Ac_1$ transformation point and not more than temperature T represented by the following formula: $T(°C) = 675 + 120·Si(\%) - 27·Ni(\%) + 30·Cr(\%) + 215.Mo(\%) - 400V(\%)$ If the quenching temperature is less than the $Ac_1$ transformation point, the matrix of the bearing pressure-resistant member will not have martensite or bainite structure. If the quenching temperature is more than the above-described temperature T, $M_{23}C_6$ carbide precipitated in the matrix will form the solid solution again.

The production process of the invention can provide a bearing pressure-resistant member having fine $M_{23}C_6$ carbide at least the outer surface, which is precipitated in the matrix in the homogeneously dispersed state as explained above. Further, in the process of the invention, reduction of $H_2$ can be effectively performed to thereby prevent hydrogen embrittlement which will be caused by hydrogen infiltration into the matrix. Accordingly, the bearing pressure-resistant member made by the process of the invention can exhibit excellent bearing fatigue strength and enhanced rolling fatigue life because of the $M_{23}C_6$ carbide finely and homogeneously dispersed.

EXAMPLES

The present invention is described in more detail by way of examples and comparative examples by referring to the accompanying drawings. However, these examples are only illustrative and not intended to limit a scope of the present invention thereto.

Examples 1-6 and Comparative Examples 1-6

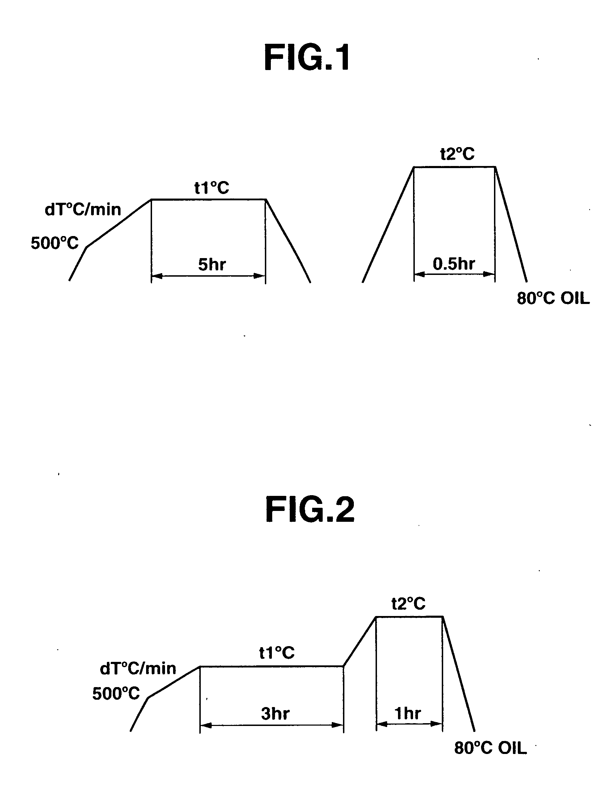

Specimens were prepared from six steel materials A-F for machine structural use, each having a chemical composition as shown in Table 1, in the following manner. The specimens made of materials A, B and C were subjected to carburizing so as to have a C content of 0.7 to 1.4 mass percent in an outer surface thereof. Next, the specimens were subjected to heat treatment including first and second isothermal heat treatments and then quenching. In the heat treatment, either of heat patterns shown in Figs. 1 and 2 was used. In Figs. 1 and 2, t1 represents a first temperature for the first isothermal heat treatment, and t2 represents a second temperature for the second isothermal heat treatment. Also, dT represents a temperature rise rate per minute in a temperature range of 500°C to 650°C. Subsequently, the specimens heat-treated were subjected to tempering at a temperature of 170°C for two hours, and then to grinding to finish the outer surface. The specimens made of materials D, E and F were not subjected to carburizing but subjected to the same heat treatment as described above. The specimens heat-treated were then subjected to tempering and grinding in the same manner as described above. Meanwhile, in Example 3, the specimen was cooled down to a temperature of 600°C after carburizing, and then was subjected to the same heat treatment as described above.

TABLE 1

| Steel Material | Chemical Composition (mass %) | | | | | | | T*(°C) |
|---|---|---|---|---|---|---|---|---|
| | C | Si | Mn | Ni | Cr | Mo | V | |
| A | 0.18 | 1.41 | 1.11 | 1.48 | 3.15 | 0.44 | 0.33 | 860 |
| B | 0.20 | 1.03 | 0.30 | 2.10 | 2.18 | 1.21 | - | 1067 |
| C | 0.33 | 0.82 | 0.24 | 2.32 | 1.62 | 1.88 | 0.13 | 1112 |
| D | 0.65 | 1.55 | 0.34 | 1.52 | 2.65 | 0.99 | 0.21 | 1028 |

T*(°C) = 675+120xSi(%)-27xNi(%)+30xCr(%)+215xMo(%)-400xV(%)

TABLE 1   (continued)

| Steel Material | Chemical Composition (mass %) | | | | | | | T*(°C) |
|---|---|---|---|---|---|---|---|---|
| | C | Si | Mn | Ni | Cr | Mo | V | |
| E | 0.87 | 0.82 | 0.18 | 2.00 | 2.02 | 0.78 | - | 948 |
| F | 1.18 | 1.10 | 0.28 | 1.04 | 1.81 | 1.44 | 0.18 | 1071 |

T*(°C) = 675+120xSi(%)-27xNi(%)+30xCr(%)+215xMo(%)-400xV(%)

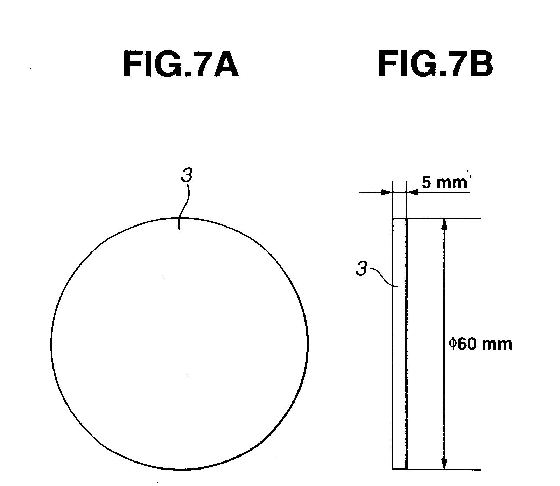

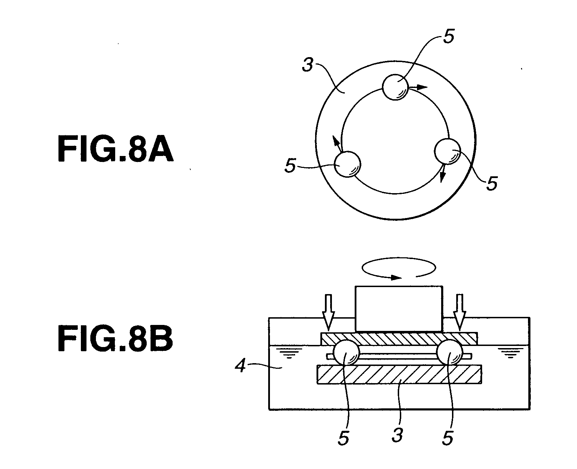

Each of the thus-prepared specimens was cut into a disk shape shown in Figs. 7A and 7B, which had a diameter of 60 mm and a thickness of 5 mm. The cut specimen was subjected to rolling fatigue test under conditions shown in Table 2, to evaluate the rolling fatigue life, i.e., the life up to flaking. The rolling fatigue life was obtained as L50 at a cumulative fracture probability of 50% based on Weibull distribution. The rolling fatigue test was conduced using a thrust rolling fatigue tester shown in Figs. 8A and 8B. As illustrated in Fig. 8B, specimen 3 was set in contact with three steel bearing balls 5 in traction oil 4. In Fig. 8B, only two steel bearing balls 5 were shown. Specimen 3 was brought into rolling contact with steel bearing balls 5 when a shaft of the tester rotates about the rotation axis as indicated by curved arrow of Fig. 8B. The results were shown in Table 3.

TABLE 2

| Testing Machine | Thrust rolling fatigue tester |
|---|---|
| Bearing Pressure | 5.23 GPa |
| Maximum Shearing Stress Depth* | 0.1 mm from outer-most surface |
| Revolution Number | 2000 rpm |
| Lubricating Oil | Transmission oil |
| Oil Temperature | 150°C |
| Counterpart Steel Ball | Three balls made of JIS SUJ2 steel, having 3/8-inch diameter |

* Depth at which maximum shearing stress was caused.

Further, each of the thus-prepared specimens was subjected to evaluation of properties of the outer surface in the following manner. The specimen was cut vertically, and the vertical cross section was subjected to etching with a nital etchant composed of 3% nitric acid alcohol solution. Microphotograph at the magnification of 10,000 of an outer portion of the vertical cross section was obtained using a scanning electron microscope (SEM). The outer portion had a depth of 0.1 mm from the outer-most surface of the specimen. The microphotograph was subjected to image analysis to measure an average particle size of precipitated carbide. Further, a local region of the vertical cross section was observed with an optical microscope to obtain an area ratio of non-carbide-precipitated portion where no carbide was precipitated, to the whole local region. The local region was located at a depth of 0.1 mm +/- 0.05 mm from the outer-most surface of the specimen. The results were shown in Table 3.

TABLE 3

| | Steel Material | Heat Pattern | Heat Treatment | | |
|---|---|---|---|---|---|
| | | | dT (°C/min) | t1 (°C) | t2 (°C) |
| Example 1 | A | Fig. 1 | 5 | 630 | 850 |
| Example 2 | B | Fig. 2 | 5 | 650 | 870 |
| Example 3 | C | Fig. 2 | 10 | 690 | 880 |
| Example 4 | D | Fig. 1 | 0.3 | 610 | 830 |
| Example 5 | E | Fig. 1 | 10 | 640 | 900 |
| Example 6 | F | Fig. 2 | 15 | 730 | 850 |
| Comparative Example 1 | A | Fig. 1 | 5 | 630 | 880 |
| Comparative Example 2 | B | Fig. 2 | 5 | 770 | 870 |

TABLE 3 (continued)

| | Steel Material | Heat Pattern | Heat Treatment | | |
|---|---|---|---|---|---|
| | | | dT (°C/min) | t1 (°C) | t2 (°C) |
| Comparative Example 3 | C | Fig. 2 | 10 | 580 | 880 |
| Comparative Example 4 | D | Fig. 2 | 40 | 610 | 830 |
| Comparative Example 5 | E | Fig. 2 | 10 | 640 | 950 |
| Comparative Example 6 | F | Fig. 1 | 15 | 760 | 850 |

TABLE 3 (continued)

| | Average Particle Size of $M_{23}C_6$ Carbide (µm) | Area Ratio of Non-Carbide-Precipitated Region (%) | Rolling Fatigue Life (L50) x10000 |
|---|---|---|---|
| Example 1 | 0.18 | 0 | 880 |
| Example 2 | 0.17 | 0 | 1000 |
| Example 3 | 0.22 | 0 | 1000 |
| Example 4 | 0.16 | 0 | 960 |
| Example 5 | 0.21 | 0 | 1000 |
| Example 6 | 0.27 | 0 | 1000 |
| Comparative Example 1 | 0.12 | 33 | 300 |
| Comparative Example 2 | 0.31 | 18 | 290 |
| Comparative Example 3 | 0.21 | 45 | 320 |
| Comparative Example 4 | 0.09 | 21 | 210 |
| Comparative Example 5 | 0.14 | 62 | 180 |
| Comparative Example 6 | 0.29 | 14 | 260 |

It was recognized from Table 3 that carbides were precipitated in the outer surfaces of the specimens obtained in Examples 1-6. The precipitated carbides were finely and homogeneously dispersed in the matrix so that the specimens obtained in Examples 1-6 exhibited the excellent rolling fatigue lives. On the contrary, it was found that the specimens obtained in Comparative Examples 1 and 5 had the regions of the outer surfaces which had no precipitated carbide because the precipitated carbide formed a solid solution with the matrix again due to the relatively high temperature t2. It was found that the specimens obtained in Comparative Examples 2 and 6 had too small amount of $M_{23}C_6$ carbide precipitated in the outer surfaces due to the relatively high temperature t1. It was found that the specimen obtained in Comparative Example 3 had the region of the outer surface which had no precipitated carbide because the growth rate of carbide was small due to the relatively low temperature t1. Further, it was confirmed that the specimens obtained in Comparative Example 4 had inhomogeneously precipitated carbide in the outer surface which was caused by less production of carbide nucleus due to the large temperature rise rate dT. As a result, the specimens obtained in Comparative Examples 1-6 exhibited the shortened rolling fatigue lives as shown in Table 3.

Examples 7-10 and Comparative Examples 7-16

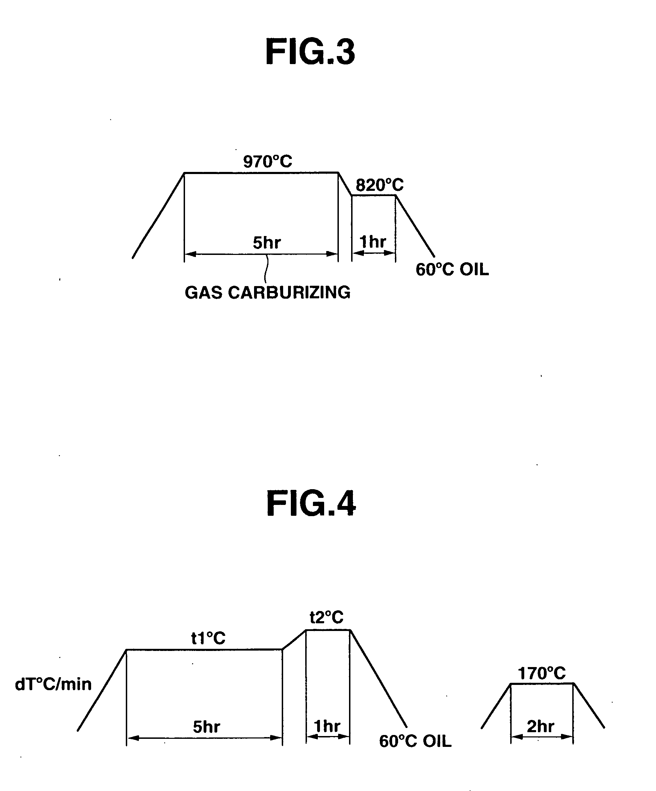

Specimens were prepared from five steel materials G-K for machine structural use, each having a chemical composition as shown in Table 4, in the following manner. The specimens were subjected to normalizing and then gas carburizing under conditions shown in Fig. 3. A carburizing gas composition (C potential) was adjusted so as to provide a C content in an outer surface of each specimen in a range of 0.7 to 0.8 mass percent. Next, the specimens were subjected to heat treatment including first and second isothermal treatments and then quenching. In the heat treatment, a heat pattern shown in Fig. 4 was used under temperature conditions TC1 to TC5 shown in Table 5. In Fig. 4, t1 and t2 and dT represent the same temperatures and temperature rise rate as described in Examples 1-6 and Comparative Examples 1-6.

TABLE 4

| Steel Material | Chemical Composition (mass %) | | | | | | | T*(°C) |
|---|---|---|---|---|---|---|---|---|
| | C | Si | Mn | Ni | Cr | Mo | V | |
| G | 0.20 | 0.93 | 0.26 | 2.32 | 1.50 | 0.96 | 0.19 | 899 |
| H | 0.18 | 1.03 | 0.30 | 2.10 | 2.18 | 1.21 | - | 1067 |
| I | 0.21 | 0.25 | 0.72 | - | 0.93 | - | - | 733 |
| J | 0.21 | 0.22 | 0.69 | - | 1.06 | 0.21 | - | 778 |
| K | 0.19 | 0.18 | 0.56 | 1.79 | 0.57 | 0.28 | - | 726 |

T*(°C) = 675+120xSi(%)-27xNi(%)+30xCr(%)+215xMo(%)-400xV(%)

TABLE 5

| Temperature Condition | dT (°C/min) | t1 (°C) | t2 (°C) |
|---|---|---|---|
| TC1 | 0.8 | 610 | 820 |
| TC2 | 5 | 700 | 880 |
| TC3 | 5 | 540 | 820 |
| TC4 | 10 | 760 | 880 |
| TC5 | 40 | 640 | 820 |

Each of the thus-prepared specimens was subjected to evaluation of properties of the outer surface in the same manner as described in Examples 1-6 and Comparative Examples 1-6. The results were shown in Table 7.

On the other hand, each of the thus-prepared specimens was cut into the same disk shape as described in Examples 1-6 and Comparative Examples 1-6. The cut specimen was subjected to grinding to finish the outer surface. Thereafter, the specimen was subjected to the rolling fatigue test to evaluate the rolling fatigue life L10 at a cumulative fracture probability of 10% based on Weibull distribution. The rolling fatigue test was conducted using the same testing machine as described in Examples 1-6 and Comparative Examples 1-6 except for using the test conditions shown in Table 6. The results were shown in Table 7.

TABLE 6

| Testing Machine | Thrust rolling fatigue tester |
|---|---|
| Bearing Pressure (Load) | 5.2 GPa (10 kg) |
| Revolution Number | 2000 rpm |
| Lubricating Oil | Nissan Traction Fluid KTF-1 |
| Oil Temperature | 150°C |
| Counterpart Steel Ball | Three balls made of JIS SUJ2 steel, having 3/8-inch diameter |

TABLE 7

| | Steel Material | Temperature Condition | Area Ratio of Non-Carbide-Precipitated Region (%) | Average Particle Size of Carbide (μm) | Rolling Fatigue Life (L10) x10000 |
|---|---|---|---|---|---|
| Example 7 | G | TC1 | 0 | 0.19 | 79 |
| Example 8 | G | TC2 | 0 | 0.21 | 118 |
| Example 9 | H | TC1 | 0 | 0.21 | 75 |
| Example 10 | H | TC2 | 0 | 0.23 | 101 |

TABLE 7 (continued)

| | Steel Material | Temperature Condition | Area Ratio of Non-Carbide-Precipitated Region (%) | Average Particle Size of Carbide (μm) | Rolling Fatigue Life (L10) x10000 |
|---|---|---|---|---|---|
| Comparative Example 7 | G | TC3 | 38 | 0.17 | 11 |
| Comparative Example 8 | G | TC5 | 31 | 0.23 | 14 |
| Comparative Example 9 | H | TC3 | 27 | 0.20 | 31 |
| Comparative Example 10 | H | TC4 | 10 | 0.08 | 18 |
| Comparative Example 11 | I | TC4 | -* | -* | 8 |
| Comparative Example 12 | I | TC5 | 16 | 0.21 | 15 |
| Comparative Example 13 | J | TC3 | 41 | 0.22 | 9 |
| Comparative Example 14 | J | TC4 | 5 | 0.12 | 19 |
| Comparative Example 15 | K | TC3 | 84 | 0.13 | 17 |
| Comparative Example 16 | K | TC4 | -* | -* | 12 |

* No carbide precipitation

It was confirmed from Table 7 that carbides were precipitated in the outer surface of the specimens obtained in Examples 7-10. The precipitated carbides were finely and uniformly dispersed in the matrix so that the specimens obtained in Examples 7-10 exhibited the excellent rolling fatigue lives. On the other hand, it was found that the specimens obtained in Comparative Examples 7, 9, 13 and 15 had the regions of the outer surface which had no precipitated carbide because carbide was grown at a small rate due to the remarkably low temperature t1. Therefore, the specimens obtained in Comparative Examples 7, 9, 13 and 15 exhibited the rolling fatigue lives less than those in Examples 7-10. It was found that the specimens obtained in Comparative Examples 10, 11, 14 and 16 had substantially no precipitated carbide in the outer surface due to the excessively high temperatures t1 and t2, and therefore had the shortened rolling fatigue lives. Further, it was found that the specimens obtained in Comparative Examples 8 and 12 had the regions of the outer surface which had no precipitated carbide because less production of carbide nucleus was caused due to the larger temperature rise rate dT. As a result, the specimens obtained in Comparative Examples 8 and 12 exhibited the shortened rolling fatigue lives as shown in Table 7.

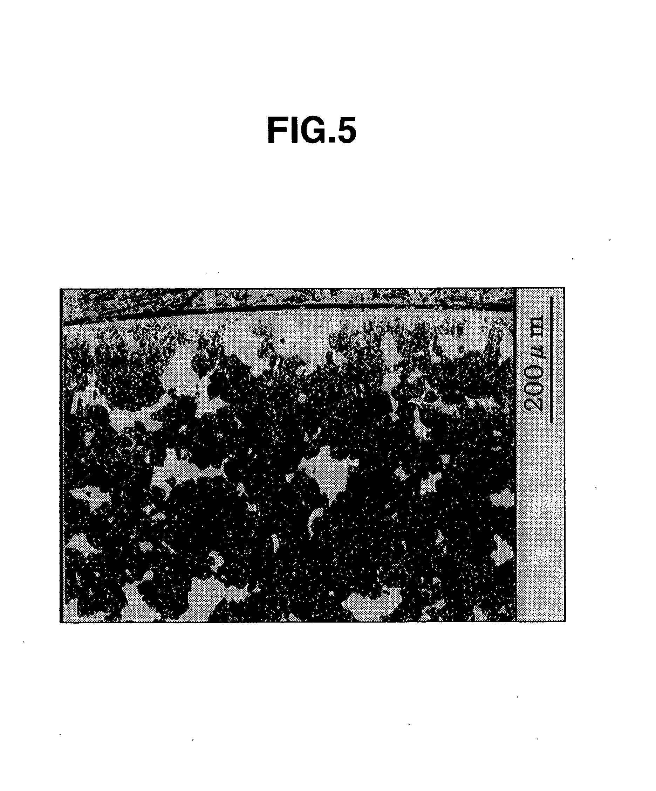

Fig. 5 shows a microphotograph of the cross-section, taken with SEM, of the outer surface of the specimen obtained in Comparative Example 1. In Fig. 5, a black part depicts the region having precipitated carbide, and a blank part depicts the region having no precipitated carbide.

Examples 11-16 and Comparative Examples 17-25

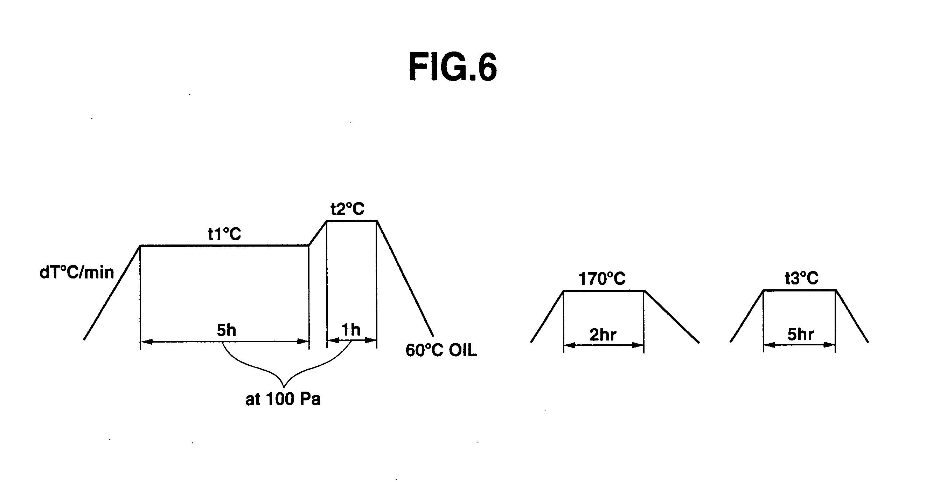

Specimens were prepared in the following manner. The specimens were made of four steel materials L-O for machine structural use, each having a chemical composition as shown in Table 8. The specimens were subjected to normalizing and then gas carburizing under conditions shown in Fig. 3. A carburizing gas composition (C potential) was adjusted so as to have such a C content in an outer surface of each specimen as shown in Table 10. Subsequently, the specimens were subjected to heat treatment in which a heat pattern shown in Fig. 6 was used under temperature conditions TC6 to TC10 shown in Table 9, under reduced ambient pressure of 100 Pa. In Fig. 6, t1, t2 and dT represent the same temperatures and temperature rise rate as described in Examples 1-6 and Comparative Examples 1-6. In Examples 11-16 and Comparative Examples 17, 18 and 23-25, the specimens were subjected to the same tempering as described in Examples 7-10 and Comparative Examples 7-16 after the heat treatment, but not held at temperature t3 for five hours. In Comparative Examples 19-22, the specimens were not subjected to the first isothermal heat treatment at temperature t1, but subjected to the second isothermal heat treatment at temperature t2 and the same tempering and then held at temperature t3 for five hours.

TABLE 8

| Steel Material | Chemical Composition (mass %) | | | | | | | T*(°C) |
|---|---|---|---|---|---|---|---|---|
| | C | Si | Mn | Ni | Cr | Mo | V | |
| L | 0.20 | 1.00 | 0.30 | 2.00 | 1.50 | 1.50 | 0.19 | 1032.5 |
| M | 0.18 | 1.03 | 0.39 | 2.10 | 2.10 | 0.70 | - | 955 |
| N | 0.22 | 0.20 | 0.65 | - | 1.50 | 0.20 | - | 787 |
| O | 0.20 | 1.00 | 0.30 | 1.90 | - | 0.70 | - | 894 |

T*(°C) = 675+120xSi(%)-27xNi(%)+30xCr(%)+215xMo(%)-400xV(%)

TABLE 9

| Temperature Condition | dT (°C/min) | t1 (°C) | t2 (°C) | t3 (°C) |
|---|---|---|---|---|
| TC6 | 5 | 650 | 820 | - |
| TC7 | 5 | 800 | 820 | - |
| TC8 | 35 | 650 | 880 | - |
| TC9 | - | - | 880 | 300 |
| TC10 | - | - | 820 | 120 |

Each of the thus-prepared specimens was cut into test pieces which were subjected to evaluation of properties. Hardness of each test piece was measured using a Vickers hardness tester. The C content in the test piece was measured by emission spectrochemical analysis. The microstructure of the precipitated carbide in the test piece was identified based on an electron beam diffraction image obtained by replica method. Average particle size and area ratio of the precipitated carbide were obtained by image analysis of a SEM microphotograph of the test piece. Whole amount of $H_2$ was obtained from a characteristic curve showing a $H_2$ amount released upon heating the specimens from 100°C to 900°C. The results were shown in Table 7.

On the other hand, each of the thus-prepared specimens was cut into the same disk shape as described in Examples 1-6 and Comparative Examples 1-6. The specimen was subjected to grinding to finish the outer surface. Next, the specimen was subjected to the rolling fatigue test to evaluate the same rolling fatigue life L50 as described in Examples 1-6 and Comparative Examples 1-6. The rolling fatigue test was conducted using the same testing machine under the same test conditions as described in Examples 7-10 and Comparative Examples 7-16. In Comparative Examples 23-25, $H_2$ was charged into the rolling fatigue tester to examine the influence of $H_2$ on the rolling fatigue lives of the specimens. The results were shown in Table 10.

TABLE 10

| | Steel Material | Surface C Content (mass %) | Temperature Condition | Surface Hardness (Hv) | $H_2$ Amount (ppm) |
|---|---|---|---|---|---|
| Example 11 | L | 1.23 | TC6 | 803 | - |
| Example 12 | L | 0.91 | TC6 | 762 | - |
| Example 13 | M | 1.32 | TC6 | 794 | - |
| Example 14 | M | 0.82 | TC6 | 755 | - |
| Example 15 | L | 0.92 | TC7 | 766 | - |
| Example 16 | L | 0.88 | TC8 | 754 | - |

TABLE 10   (continued)

| | Steel Material | Surface C Content (mass %) | Temperature Condition | Surface Hardness (Hv) | $H_2$ Amount (ppm) |
|---|---|---|---|---|---|
| Comparative Example 17 | L | 1.65 | TC6 | 798 | - |
| Comparative Example 18 | L | 0.51 | TC6 | 470 | - |
| Comparative Example 19 | L | 0.89 | TC9 | 620 | 0.4 |
| Comparative Example 20 | L | 0.89 | TC10 | 768 | 0.7 |
| Comparative Example 21 | N | 0.96 | TC10 | 753 | 0.7 |
| Comparative Example 22 | O | 0.82 | TC10 | 741 | 0.6 |
| Comparative Example 23 | L | 1.23 | TC6 | 803 | 0.7 |
| Comparative Example 24 | L | 1.23 | TC6 | 803 | 1.2 |
| Comparative Example 25 | L | 1.23 | TC6 | 803 | 1.9 |

TABLE 10 (continued)

| | Precipitated Carbide | | | |
| | Micro-structure | Average Particle size (μm) | Area Ratio (%) | Rolling Fatigue Life (L50) $\times 10^7$ |
|---|---|---|---|---|
| Example 11 | $M_{23}C_6$ | 0.22 | 13 | 11.5 |
| Example 12 | $M_{23}C_6$ | 0.17 | 9 | 10.2 |
| Example 13 | $M_{23}C_6$ | 0.20 | 16 | 10.9 |
| Example 14 | $M_{23}C_6$ | 0.19 | 8 | 9.8 |
| Example 15 | $M_3C$ | 7.25 | 1 | 2.1 |
| Example 16 | $M_{23}C_6$ | 0.35 | 4 | 5.1 |
| Comparative Example 17 | $M_3C + M_{23}C_6$ | 3.46 | 22 | 0.1 |
| Comparative Example 18 | -* | -* | -* | 0.4 |
| Comparative Example 19 | -* | -* | -* | 0.9 |
| Comparative Example 20 | -* | 0.19 | 1 | 1.8 |
| Comparative Example 21 | $M_3C$ | 0.15 | 1 | 0.4 |

-* No data detected.

TABLE 10 (continued)   (continued)

| | Precipitated Carbide | | | |
|---|---|---|---|---|
| | Micro-structure | Average Particle size (µm) | Area Ratio (%) | Rolling Fatigue Life (L50) x$10^7$ |
| Comparative Example 22 | -* | -* | -* | 1.1 |
| Comparative Example 23 | $M_{23}C_6$ | 0.22 | 13 | 1.3 |
| Comparative Example 24 | $M_{23}C_6$ | 0.22 | 13 | 0.4 |
| Comparative Example 25 | $M_{23}C_6$ | 0.22 | 13 | 0.3 |

-* No data detected.

It was found from Table 10 that no $H_2$ released from the specimens obtained in Examples 11-16 was detected and the specimens exhibited the excellent rolling fatigue lives. On the contrary, it was found that the specimen obtained in Comparative Example 17 exhibited the deteriorated rolling fatigue life because network of $M_3C$ carbide was precipitated at grain boundaries of austenite particles due to too large C content in the outer surface of the specimen. It was found that the specimen obtained in Comparative Example 18 exhibited the deteriorated rolling fatigue life because sufficient hardness was not obtained due to too small C content in the outer surface of the specimen. It was found that the specimen obtained in Example 15 had no $M_{23}C_6$ carbide precipitated but coarse $M_3C$ carbide precipitated at grain boundaries of austenite particles because the first temperature t1 was more than $Ac_1$ transformation point. As a result, the specimen obtained in Example 15 exhibited the rolling fatigue life shorter than that of the specimen obtained in each of Examples 11-14. The specimen obtained in Example 15 is suitably applicable to low-power automobiles. It was found that the specimen obtained in Example 16 exhibited non-uniformity in precipitation of carbide because production of nucleus of $M_{23}C_6$ carbide was insufficient due to the large temperature rise rate dT. The specimen obtained in Example 16, therefore, had the shorter rolling fatigue life than that of the specimen obtained in each of Examples 11-14. The specimen obtained in Example 16 also is suitably applicable to low-power automobiles. Further, it was found that the specimen obtained in Comparative Example 19 had no $M_{23}C_6$ carbide precipitated in the outer surface and the lower surface hardness because the first isothermal heat treatment was omitted. The specimen obtained in Comparative Example 19, therefore, exhibited the deteriorated rolling fatigue life. It was found that the specimen obtained in each of Comparative Examples 20-22 had no $M_{23}C_6$ carbide precipitated in the outer surface and the $H_2$ amount insufficiently reduced, because the first isothermal heat treatment was omitted and the temperature t3 after tempering at 170°C was lower. As a result, the specimens obtained in Comparative Examples 20-22 exhibited the deteriorated rolling fatigue lives. Further, it was confirmed that the specimens obtained in Comparative Examples 23-25 exhibited the rolling fatigue lives which were deteriorated as the residual $H_2$ amount increased.

This application is based on prior Japanese Patent Applications No. 2001-148517 filed on May 17, 2001 and No. 2001-160694 filed on May 29, 2001, the entire contents of which are hereby incorporated by reference.

Although the invention has been described above by reference to certain examples of the invention, the invention is not limited to the examples described above. Modifications and variations of the examples described above will occur to those skilled in the art in light of the above teachings. The scope of the invention is defined with reference to the following claims.

**Claims**

1.  A bearing pressure-resistant member, comprising:

    a matrix and a carbide dispersed in the matrix, said carbide having an average particle size of not more than 0.3 µm; and
    a C content ranging from 0.6 to 1.5 mass percent in an outer surface thereof.

2.  The bearing pressure-resistant member as claimed in claim 1, wherein said bearing pressure-resistant member is made of a mechanical structural steel containing C in an amount ranging from 0.6 to 1.5 mass percent.

3. The bearing pressure-resistant member as claimed in claim 1, wherein said bearing pressure-resistant member is made of a mechanical structural steel containing C in an amount ranging from 0.6 to 1.5 mass percent, Cr in an amount ranging from 1.2 to 3.2 mass percent, and Mo in an amount ranging from 0.25 to 2.0 mass percent, said carbide comprising $M_{23}C_6$ carbide containing at least Cr.

4. The bearing pressure-resistant member as claimed in claim 1, wherein said bearing pressure-resistant member is made of a mechanical structural steel which contains Cr in an amount ranging from 1.2 to 3.2 mass percent and Mo in an amount ranging from 0.25 to 2.0 mass percent, and treated by either of carburizing and carbonitriding, said carbide comprising $M_{23}C_6$ carbide containing at least Cr.

5. The bearing pressure-resistant member as claimed in claim 1, wherein an amount of C contained in the bearing pressure-resistant member is enhanced to said C content by either of carburizing and carbonitriding.

6. The bearing pressure-resistant member as claimed in claim 1, wherein an amount of C contained in the bearing pressure-resistant member is enhanced to said C content by either of gas carburizing and gas carbonitriding, and a whole amount of $H_2$ released over a temperature range of 100°C to 900°C is limited to not more than 0.2 ppm.

7. The bearing pressure-resistant member as claimed in claim 6, wherein said bearing pressure-resistant member is made of a mechanical structural steel containing Cr in an amount ranging from 1.2 to 3.2 mass percent and Mo in an amount ranging from 0.25 to 2.0 mass percent, said carbide comprising $M_{23}C_6$ carbide containing at least Cr.

8. A process for making a bearing pressure-resistant member, comprising:

   subjecting a workpiece containing C to either of gas carburizing and gas carbonitriding to enhance a C content in an outer surface of the workpiece to 0.6 to 1.5 mass percent;
   holding the workpiece at a first temperature (t1) not more than an $Ac_1$ transformation point under reduced pressure;
   heating the workpiece to a second temperature (t2) not less than the $Ac_1$ transformation point under reduced pressure, followed by holding the workpiece at the second temperature (t2); and
   subjecting the workpiece to quenching.

9. The process as claimed in claim 8, wherein the workpiece is made of a mechanical structural steel containing Cr in an amount ranging from 1.2 to 3.2 mass percent and Mo in an amount ranging from 0.25 to 2.0 mass percent, the first temperature (t1) is in a range of 600°C to 750°C which is reached by heating the workpiece at a rate (dT) of 0.2°C to 30°C per minute in a temperature range of 500°C to 650°C, and the second temperature (t2) is in a range not less than the $Ac_1$ transformation point but not more than a predetermined temperature T represented by the following formula:

$$T\ (°C) = 675 + 120·Si\ (\%) - 27·Ni\ (\%) + 30·Cr\ (\%) + 215·Mo\ (\%) - 400V\ (\%).$$

10. The process as claimed in claim 9, wherein the rate (dT) of heating the workpiece in the temperature range of 500°C to 650°C is in a range of 0.2°C to 5°C per minute.

11. A process for making a bearing pressure-resistant member, comprising:

    heating a workpiece made of a mechanical structural steel containing C in an amount ranging from 0.6 to 1.5 mass percent, to a first temperature (t1) of 600°C to 750°C wherein the workpiece is heated at a rate (dT) of 0.2°C to 30°C per minute in a temperature range of 500°C to 650°C;
    holding the workpiece at the first temperature (t1);
    heating the workpiece to a second temperature (t2) not less than an $Ac_1$ transformation point and not more than an Acm transformation point, followed by holding the workpiece at the second temperature (t2); and
    subjecting the workpiece to quenching.

12. The process as claimed in claim 11, further comprising subjecting the workpiece to either of carburizing and carbonitriding to enhance the C content in an outer surface of the workpiece to 0.6 to 1.5 mass percent before heating the workpiece to the first temperature (t1).

**13.** The process as claimed in claim 11, wherein the rate (dT) of heating the workpiece in the temperature range of 500°C to 650°C is in a range of 0.2°C to 5°C per minute.

**14.** A process for making a bearing pressure-resistant member, comprising:

heating a workpiece made of a mechanical structural steel containing C in an amount ranging from 0.6 to 1.5 mass percent, Cr in an amount ranging from 1.2 to 3.2 mass percent, and Mo in an amount ranging from 0.25 to 2.0 mass percent, to a first temperature (t1) of 600°C to 750°C under reduced pressure wherein the workpiece is heated at a rate (dT) of 0.2°C to 30°C per minute in a temperature range of 500°C to 650°C under reduced pressure;
holding the workpiece at the first temperature (t1);
heating the workpiece to a second temperature (t2) not less than an $Ac_1$ transformation point and not more than a predetermined temperature T represented by the following formula:

$$T(°C) = 675 + 120 \cdot Si(\%) - 27 \cdot Ni(\%) + 30 \cdot Cr(\%) + 215 \cdot Mo(\%) - 400V(\%);$$

holding the workpiece at the second temperature (t2); and
subjecting the workpiece to quenching.

**15.** The process as claimed in claim 14, further comprising subjecting the workpiece to either of carburizing and carbonitriding to enhance the C content in an outer surface of the workpiece to 0.6 to 1.5 mass percent before heating the workpiece to the first temperature (t1).

**16.** The process as claimed in claim 14, wherein the rate (dT) of heating the workpiece in the temperature range of 500°C to 650°C is in a range of 0.2°C to 5°C per minute.

# FIG.1

# FIG.2

# FIG.3

970°C

820°C

5hr

1hr

GAS CARBURIZING

60°C OIL

# FIG.4

t2°C

t1°C

dT°C/min

170°C

5hr

1hr

2hr

60°C OIL

# FIG.5

# FIG.6

# FIG.7A

# FIG.7B

*3*

*3*

5 mm

ϕ60 mm

FIG.8A

FIG.8B